# EUROPÄISCHE PATENTSCHRIFT

(11) **EP 1 302 038 B1**
(45) Veröffentlichungstag und Bekanntmachung des Hinweises auf die Patenterteilung: **02.03.2005**
(21) Anmeldenummer: 01960100.4
(22) Anmeldetag: 06.07.2001
(51) Int. Cl.: H04L 25/14, H04L 25/49

(54) **VERFAHREN UND DIGITALE SCHALTUNGSANORDNUNG ZUM ÜBERTRAGEN EINER VIELZAHL VON BITFOLGEN ÜBER MEHRERE BUSLEITUNGEN**
METHOD AND DIGITAL CIRCUIT FOR TRANSMITTING A PLURALITY OF BIT SEQUENCES VIA SEVERAL BUS LINES
PROCEDE ET CIRCUIT NUMERIQUE DESTINES A LA TRANSMISSION D'UNE PLURALITE DE SEQUENCES DE BITS PAR PLUSIEURS LIGNES OMNIBUS

(30) Priorität: 06.07.2000 DE 10032932
(43) Veröffentlichungstag der Anmeldung: 16.04.2003
(73) Patentinhaber: Infineon Technologies AG, 81669 München (DE)
(72) Erfinder: WERNER, Christoph, 85665 Moosach (DE)
(74) Vertreter: Dokter, Eric-Michael
(86) Internationale Anmeldenummer: PCT/DE2001/002502
(87) Internationale Veröffentlichungsnummer: WO 2002/003638

(56) Entgegenhaltungen:
- DE-A- 4 142 652
- CARTER R O: "LOW-DISPARITY BINARY CODING SYSTEM" ELECTRONICS LETTERS, IEE STEVENAGE, GB, Bd. 1, Nr. 3, Mai 1965 (1965-05), Seiten 67-68, XP000761080 ISSN: 0013-5194
- CUVIELLO ET AL: "Fault modeling and simulation for crosstalk in system-on-chip interconnects" COMPUTER-AIDED DESIGN, 1999. DIGEST OF TECHNICAL PAPERS. 1999 IEEE/ACM INTERNATIONAL CONFERENCE ON SAN JOSE, CA, USA 7-11 NOV. 1999, PISCATAWAY, NJ, USA,IEEE, US, 7. November 1999 (1999-11-07), Seiten 297-303, XP010363811 ISBN: 0-7803-5832-5 in der Anmeldung erwähnt

## Beschreibung

Die Erfindung betrifft ein Verfahren sowie eine digitale Schaltungsanordnung zum Übertragen einer Vielzahl zu übertragender Bitfolgen über mehrere Busleitungen sowie ein Verfahren und eine digitale schaltungsanordnung zum Bearbeiten einer Vielzahl über mehrere Busleitungen empfangener Bitfolgen.

Solche Verfahren und solche digitalen Schaltungsanordnungen sind aus [1] bekannt.

Insbesondere bei digitalen Logikschaltungen, bei denen die einzelnen elektrischen Leitungen in einer Nähe von unterhalb 0,25 µm voneinander benachbart angeordnet sind, stellt das sogenannte Übersprechen von elektrischen Signalen zwischen benachbarten Leiterbahnen, d.h. Leitungen ein großes Problem dar.

Beispielsweise bei Busleitungen einer größeren Länge von einigen Millimetern bis Zentimetern, führen die sogenannten Koppelkapazitäten zwischen den einzelnen Leiterbahnen, d.h. den einzelnen Leitungen, die unterschiedliche Logikblöcke, d.h. Schaltungskomponenten innerhalb einer Rechneranordnung oder in einem Computerchip miteinander koppeln, zu Störsignalen auf den benachbart liegenden Leitungen, wenn die Frequenz der zu übertragenden Signale in einem Bereich von ungefähr einem GHz und darüber liegt.

Diese Störsignale können zu Übertragungsfehlern der zu übertragenden elektrischen Signale, welche zu übertragende Bitfolgen repräsentieren, führen. Beim Empfänger führt das zu einer fehlerhaften Decodierung der Bitfolgen, d.h. zu einer fehlerhaften Bestimmung der ursprünglich gesendeten Bitfolgen.

Um das Übersprechen der elektrischen Signale zu verringern ist es aus [1] bekannt, die Amplitude der elektrischen Signale, die die zu übertragende Bitfolgen repräsentieren, nach einer relativ kurzen Leitungslänge in ihrer Amplitude wieder aufzufrischen unter Verwendung sogenannter Repeater-Bauelemente.

Weiterhin ist es aus [2] bekannt, zwischen den einzelnen Datenleitungen, die auch als aktive Busleitungen bezeichnet werden, über die die zu übertragenden Bitfolgen als elektrische Signale übertragen werden, weitere Leitungen vorzusehen, mit denen die elektrischen Signale zwischen den aktiven Leitungen elektrisch abgeschirmt werden sollen.

Sowohl das Vorsehen von Repeater-Bauelementen als auch von zusätzlichen Abschirmleitungen begründet einen erhöhten Platzbedarf in einer digitalen Schaltungsanordnung und führen somit zu einer erheblichen Vergrößerung der benötigten Chipfläche in einer solchen digitalen Logikschaltung.

Weiterhin ist es aus [3] bekannt, mittels sogenannter fehlererkennenden Codes unter Verwendung zusätzlicher sogenannter Parity-Check-Bits einzelne fehlerhafte elektrische Signale zu erkennen und teilweise sogar zu korrigieren. Gemäß dieser Vorgehensweise ist jedoch eine relativ hohe Redundanz der zu übertragenden Daten erforderlich, was zu einer erheblichen Reduktion der erreichbaren Nutzdatenrate bei der Übertragung der zu übertragenden Bitfolgen führt.

Insbesondere bei der oben beschriebenen Anwendung bei digitalen Logikschaltungen, bei denen ein Übersprechen von Signalen zwischen benachbarten Busleitungen beobachtet werden kann ist es nicht möglich, als fehlerhaft erkannte Signale durch eine Wiederholung des Übertragungsvorgangs der zu übertragenden Bitfolge die aufgetretenen und erkannten Fehler zu korrigieren, weil das Übersprechen der elektrischen Signale kein statistisch bestimmter Vorgang ist, sondern bei der zweiten Übertragung in gleicher Weise wieder auftreten würde.

Weiterhin ist es aus [4] bekannt, dass der Grad des Übersprechens abhängig ist von unterschiedlichen Faktoren.

So haben, wie in [4] beschrieben ist, die Stärke des Treibersignals, die Länge der einzelnen Leitungen, die Taktrate, d.h. die Übertragungsrate der einzelnen elektrischen Signale, das Impedanz-Matching und weitere Parameter einen erheblichen Einfluss auf den tatsächlich auftretenden Grad des Übersprechens zwischen zwei oder mehr elektrischen Leitungen.

Weiterhin ist ein Verfahren zum Ermitteln von Bitfolgenkombinationen mit erhöhter Bitfehlerwahrscheinlichkeit, d.h. störungsanfälligere Bitfolgenkombinationen aus [5] bekannt.

In [6] sind Grundlagen über Codierungsprinzipien und die Darstellung von Codes zu finden.

In [7] ist ein Verfahren zur Umwandlung von Datenworten beschrieben, bei denen aus den 16384 möglichen Datenwortkombinationen 14-Bit-breiter Datenworte solche Datenworte ausgewählt werden, bei denen
- mindestens 2 aufeinanderfolgende Bits gleich sind,
- höchstens 8 aufeinanderfolgende Bits gleich sind, und
- am Anfang und Ende eines Datenwortes höchstens 4 aufeinanderfolgende Bits gleich sind.

Von den nach dieser Vorschrift erhaltenen 266 14-Bit-breiten Datenworten werden 256 Datenworte ausgewählt, die den 256 möglichen Datenworten eines 8-Bit-breiten Datensignals zugeordnet werden, wobei die Zuordnung beliebig festlegbar ist.

Der Erfindung liegt das Problem zugrunde, eine Vielzahl zu übertragender Bitfolgen über mehrere Busleitungen zu übertragen, wobei die auftretende Gesamtfehlerwahrscheinlichkeit, d.h. allgemein die Fehlerwahrscheinlichkeit aufgrund auftretenden Übersprechens von elektrischen Signalen zwischen den Leitungen, gegenüber dem in [1] bekannten Verfahren reduziert wird.

Das Problem wird durch die Verfahren und die digitalen Schaltungsanordnungen mit den Merkmalen gemäß den unabhängigen Patentansprüchen gelöst.

Bei einem Verfahren zum Übertragen einer zu übertragenden Bitfolge über mehrere Busleitungen wird in einem ersten Schritt eine vorgegebene erste Bitfolgenkombination in der Vielzahl zu übertragender Bitfolgen ermittelt. Die erste Bitfolgenkombination ist durch eine erhöhte Bitfehlerwahrscheinlichkeit bei deren Übertragung gekennzeichnet.

So kann beispielsweise, wie aus [5] bekannt ist, bei drei sehr eng benachbarten, d.h. nah beieinander liegenden elektrischen Leitungen, beispielsweise bei elektrischen Leitungen, die in einer Nähe von ungefähr 0,25 µm nebeneinander benachbart angeordnet sind, ein Übersprechen der angelegten elektrischen Signale auf den jeweiligen Leitungen auftreten.

Beispielsweise ist beobachtet worden, dass, wenn zu einem ersten Zeitpunkt an den drei Busleitungen die Bitfolge mit den logischen Werten "010", d.h. eine Bitfolge an den drei Leitungen anliegt, wobei an den äußeren Leitungen jeweils ein Pegel von 0 V anliegt und an der mittleren Leitung ein High-Pegel, d.h. eine elektrische Spannung von beispielsweise ungefähr 2,5 V anliegt, eine erhöhte Wahrscheinlichkeit für ein auftretendes Übersprechen beobachtet wird, wenn in dem unmittelbar darauffolgenden Zeitschritt, vorgegeben durch eine nicht dargestellte, die elektrischen Leitungen, d.h. das Übertragungsverhalten taktende Takteinheit vorgegebenen darauffolgenden Zeitschritt, die Bitfolge "101" an die Leitungen angelegt wird.

Anders ausgedrückt bedeutet dies, dass in dem unmittelbar darauffolgenden Zeitschritt an den äußeren Bitleitungen jeweils ein High-Pegel, d.h. eine elektrische Spannung mit dem Wert ungleich Null angelegt wird und dann an die mittlere Leitung keine elektrische Spannung angelegt wird.

Aufgrund des Übersprechens, d.h. insbesondere aufgrund der Koppelkapazitäten zwischen den Leitungen weist jedoch die mittlere Leitung aufgrund des Übergangszustands einen durch den High-Pegel des elektrischen Signals an den äußeren Leitungen generierten elektrischen Signalpegel auf, der ungleich Null ist.

Mit einer nicht zu vernachlässigenden Wahrscheinlichkeit wird der elektrische Signalpegel empfängerseitig als ein High-Pegel interpretiert, der einen Bitwert logisch "1" beschreiben soll, und somit auch entsprechend decodiert. Dies ist der Fall, wenn der Signalpegel des an der mittleren Leitung anliegenden elektrischen Signals größer ist als ein vorgegebener Schwellenwert beim Empfänger.

Solche Bitfolgenkombinationen, d.h. zwei Bitfolgen und die zugehörigen Zustandsübergänge zwischen den beiden Bitfolgen zu zwei unterschiedlichen, unmittelbar aufeinanderfolgenden Zeitpunkten kann sowohl informationstheoretisch ermittelt werden als auch empirisch, indem an einer als sogenannte

"Black-Box" angesehene elektrische Schaltung an deren Eingänge unterschiedliche Bitmuster, d.h. Bitfolgen angelegt werden und in einer Vielzahl von Iterationen, in denen die einzelnen Bitfolgen wiederholt an die Eingänge angelegt werden, ermittelt wird, ob das Übertragungsverhalten der jeweiligen Bitfolgen bzw. Übergänge zwischen den Bitfolgen störungsanfällig ist oder nicht.

Unter Bildung von Histogrammen, d.h. durch einfaches Zählen fehlerhafter Übertragungen und der entsprechenden Zuordnungen der fehlerhaften Übertragungen zu den Zustandsübergängen zwischen Bitfolgen, die an die Eingänge der elektrischen Schaltung angelegt worden sind, werden störungsanfällige Bitfolgenkombinationen, d.h. erste Bitfolgenkombinationen mit erhöhter Bitfehlerwahrscheinlichkeit ermittelt.

Diese durch eine erhöhte Bitfehlerwahrscheinlichkeit gekennzeichneten ersten Bitfolgenkombinationen werden beispielsweise in einer Tabelle in einem Speicher einer Codiervorrichtung gespeichert.

Ferner kann auf die oben beschriebenen Arten auch ermittelt werden, welche Bitfolgenkombinationen hinsichtlich der Störungsanfälligkeit robust sind, d.h. welche Bitfolgenkombinationen zu einer geringeren Bitfehlerwahrscheinlichkeit führen.

Somit wird auf die oben beschriebene Weise auch eine Mehrzahl zweiter Bitfolgenkombinationen ermittelt, die verglichen mit den zuvor ermittelten ersten Bitfolgenkombinationen eine reduzierte Bitfehlerwahrscheinlichkeit bei deren Übertragung aufweisen. Die ersten Bitfolgenkombinationen und entsprechende zweite Bitfolgenkombinationen, die beispielsweise aus einer jeweiligen ersten Bitfolgenkombination durch Veränderung jeweils eines Bits bereitgestellt werden können, werden in einer Abbildungstabelle gespeichert.

Somit ist eine Tabelle als Abbildungstabelle gespeichert, in der angegeben ist jeweils eine erste Bitfolgenkombination mit erhöhter Bitfehlerwahrscheinlichkeit und eine dieser ersten Bitfolgenkombination zugeordnete zweite Bitfolgenkombination mit reduzierter Bitfehlerwahrscheinlichkeit.

Ist gemäß dem Verfahren in der Vielzahl zu übertragender Bitfolgen zumindest eine vorgegebene erste Bitfolgenkombination ermittelt worden, so wird die erste Bitfolgenkombination vorzugsweise abhängig von der gespeicherten Tabelle in die entsprechend zugehörige zweite Bitfolgenkombination mit reduzierter Bitfehlerwahrscheinlichkeit umgewandelt.

Bei jeder erfolgten Umwandlung einer ersten Bitfolgenkombination in eine zweite Bitfolgenkombination wird ein Umwandlungsbit gespeichert.

Alternativ ist es vorgesehen, für jede Bitfolgenkombination ein Umwandlungsbit zu erzeugen und zu speichern, wobei für den Fall, dass eine Umwandlung einer ersten Bitfolgenkombination in eine zweite Bitfolgenkombination vorgenommen wird, das Umwandlungsbit mit einem ersten Wert gespeichert wird und für den Fall, dass keine Umwandlung der Bitfolgenkombination vorgenommen wird, dem Umwandlungsbit ein zweiter Binärwert zugeordnet wird.

Die Vielzahl zu übertragender Bitfolgen mit der nunmehr jeweils abgebildeten, d.h. umgewandelten zweiten Bitfolgenkombination sowie die erzeugten Umwandlungsbits werden in einem letzten Verfahrensschritt übertragen.

Gemäß einer Ausgestaltung der Erfindung kann bei der Übertragung zu jedem Übertragungszeitpunkt, vorgegeben beispielsweise durch eine Takteinheit, jeweils ein Bit an jede elektrische Leitung, beispielsweise eine Busleitung, angelegt werden. Die erste Bitfolgenkombination und die zweite Bitfolgenkombination werden jeweils durch zeitlich aufeinanderfolgende Bits gebildet, die zu aufeinanderfolgenden Übertragungszeitpunkten an den elektrischen Leitungen, d.h. vorzugsweise den Busleitungen, angelegt werden sollen.

Weiterhin ist es gemäß einer Ausgestaltung der Erfindung vorgesehen, dass die Umwandlungsbits über eine weitere Busleitung übertragen werden.

Alternativ können die Umwandlungsbits auch zeitlich versetzt zu der zugehörigen zweiten Bitfolgenkombination über die Leitungen übertragen werden, beispielsweise können eine vorgegebene Anzahl von Umwandlungsbits nach einer entsprechend vorgegebenen Anzahl von übertragenen Bitfolgenkombinationen, beispielsweise nach einer vorgegebenen Anzahl von Takten über die Leitungen als eigener Umwandlungsbit-Vektor übertragen werden. Bei einem Ausführungsbeispiel mit drei Busleitungen, allgemein mit n-Busleitungen, wird ein Umwandlungsbit-Vektor mit n-Umwandlungsbits nach n-Takten, d.h. nach der Übertragung von n-Bitfolgen an die elektrischen Leitungen angelegt.

Selbstverständlich ist es alternativ ebenfalls möglich, die Umwandlungsbits in einer anderen Reihenfolge zu übertragen, so lange es für den Empfänger möglich ist, die Umwandlungsbits den jeweiligen Bitfolgen zuzuordnen.

Unter einer Bitfolge ist bei Einsatz mehrer Bit-Leitungen jeweils eine Anzahl von jeweils ein Bit repräsentierenden elektrischen Signalen zu verstehen, die zu einem Taktzeitpunkt, d.h. zu einem Übertragungszeitpunkt an die elektrischen Leitungen angelegt werden.

Wie oben beschrieben wurde, können die ersten Bitfolgenkombinationen mit erhöhter Bitfehlerwahrscheinlichkeit zu Beginn des Verfahrens ermittelt werden, beispielsweise empirisch unter Verwendung eines Übertragungssystems oder eines Modells eines Übertragungssystems, welches im wesentlichen die gleichen Übertragungseigenschaften wie die Busleitungen aufweist.

Zur Ermittlung einer ersten Bitfolgenkombination kann auch das Übertragungssystem selbst eingesetzt werden, anhand dessen in einer Trainingsphase die entsprechenden ersten Bitfolgenkombinationen ermittelt werden können.

Bei einem Verfahren zum Bearbeiten einer Vielzahl empfangener Bitfolgen über mehrere Busleitungen wird nach Empfang der Vielzahl der entsprechenden Bitfolgen oder schon während des Empfangs der Vielzahl der entsprechenden Bitfolgen mindestens eine vorgegebene zweite Bitfolgenkombination in der Vielzahl empfangener Bitfolgen ermittelt. Die zweite Bitfolgenkombination ist gekennzeichnet durch eine verglichen mit einer ersten Bitfolgenkombination reduzierten Bitfehlerwahrscheinlichkeit.

Für die zweite Bitfolgenkombination wird jeweils ermittelt, ob zu dieser ein zugehöriges Umwandlungsbit vorhanden ist, mit dem angegeben wird, dass die ermittelte zweite Bitfolgenkombination eine umgewandelte erste Bitfolgenkombination darstellt.

Alternativ ist es vorgesehen, für jede ermittelte Bitfolgenkombination zu jedem Übertragungszeitpunkt, d.h. empfängerseitig zu jedem Empfangszeitpunkt, jeweils ein ebenfalls empfangenes Umwandlungsbit zu analysieren, d.h. auszuwerten, und zu ermitteln, ob gemäß dem Umwandlungsbit sendeseitig eine Umwandlung der empfangenen Bitfolgenkombination stattgefunden hat oder nicht.

Werden die Umwandlungsbits zeitlich versetzt empfangen, so ist es erforderlich, zumindest die zugehörigen zweiten Bitfolgenkombinationen zwischenzuspeichern und erst nach Empfang aller entsprechenden Umwandlungsbits und den zugehörigen zweiten Bitfolgenkombinationen die Umwandlungsbits zu analysieren und eventuell in einem weiteren Schritt die zweiten Bitfolgenkombinationen in die gemäß der ebenfalls empfängerseitig gespeicherten Abbildungstabelle invers in die zugehörigen ersten Bitfolgenkombinationen umzuwandeln.

Eine digitale Schaltungsanordnung zum Übertragen einer Vielzahl zu übertragender Bitfolgen über mehrere Busleitungen weist eine Bitfolgen-Ermittlungseinheit zum Ermitteln mindestens einer vorgegebenen ersten Bitfolgenkombination der Vielzahl zu übertragender Bitfolgen auf. Ferner weist die digitale Schaltungsanordnung eine Bitfolgen-Umwandlungseinheit zum Umwandeln der ermittelten ersten Bitfolgenkombination in eine zweite Bitfolgenkombination, vorzugsweise gemäß einer vorgegebenen Abbildungstabelle, auf. Durch die Bitfolgen-Umwandlungseinheit wird zumindest bei jeder Umwandlung ein Umwandlungsbit erzeugt, mit dem angegeben wird, dass die zweite Bitfolgenkombination eine umgewandelte erste Bitfolgenkombination darstellt. Weiterhin ist eine Übertragungseinheit zum Übertragen der Vielzahl zu übertragender Bitfolgen mit der zweiten Bitfolgenkombination und den Umwandlungsbits vorgesehen.

Die digitale Schaltungsanordnung kann eine Mehrzahl oder Vielzahl von Bit-Leitungen aufweisen, die an die Übertragungseinheit angeschlossen sind, zum Übertragen der Vielzahl zu übertragender Bitfolgen.

Eine digitale Schaltungsanordnung zum Bearbeiten einer Vielzahl empfangener Bitfolgen über mehrere Busleitungen weist eine Empfangseinheit zum Empfangen der übertragenen Bitfolge auf sowie eine Bitfolgen-Ermittlungseinheit zum Ermitteln mindestens einer vorgegebenen zweiten Bitfolgenkombination in der Vielzahl empfangener Bitfolgen.

In einer ebenfalls vorgesehen Umwandlungsbit-Ermittlungseinheit wird für die zweite Bitfolgenkombination ermittelt, ob zu dieser ein zugehöriges Umwandlungsbit vorhanden ist, mit dem angegeben wird, dass die ermittelte zweite Bitfolgenkombination eine umgewandelte erste Bitfolgenkombination darstellt.

Weiterhin ist eine Bitfolgen-Umwandlungseinheit zum Umwandeln einer ermittelten zweiten Bitfolgenkombination in die erste Bitfolgenkombination vorgesehen.

Ein Ausführungsbeispiel der Erfindung ist in der Figur dargestellt und wird im weiteren näher erläutert.

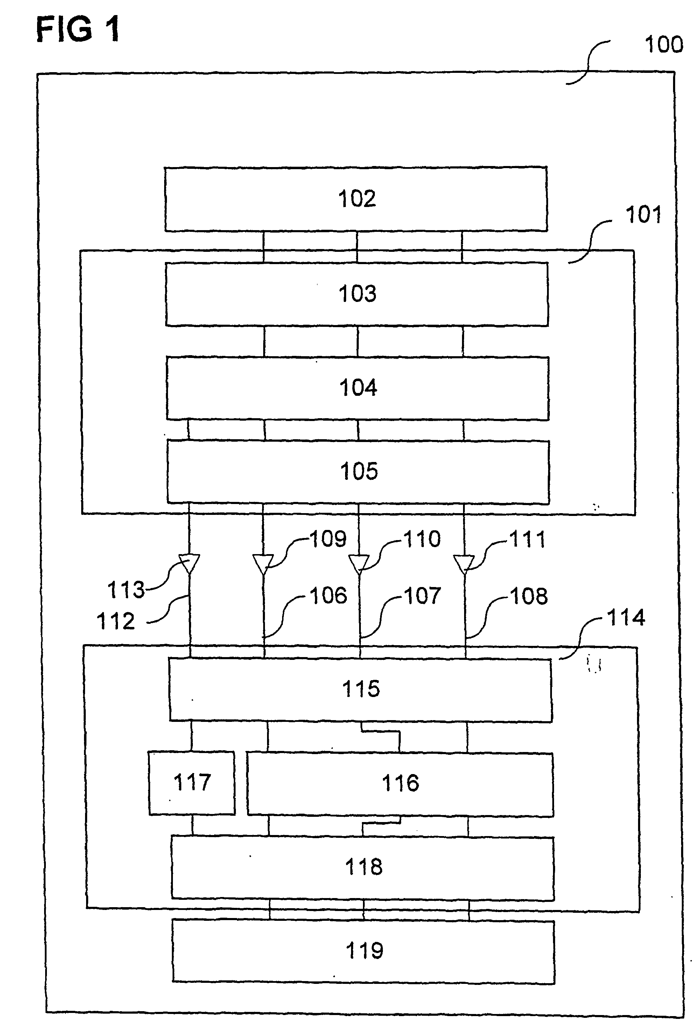

Es zeigt
- Figur 1: ein Blockdiagramm einer Codiervorrichtung gemäß einem Ausführungsbeispiel der Erfindung.

Fig.1 zeigt eine digitale Schaltungsanordnung auf einem Computerchip 100 mit einer Codiervorrichtung 101 und einer Decodiervorrichtung 114, die mittels eines Computerbus mit 3 Bit Datenwort-Busbreite, d.h. mit drei elektrischen Leitungen 106, 107, 108 miteinander elektrisch gekoppelt sind.

Gemäß dem Ausführungsbeispiel handelt es sich um eine 1000µm lange Busleitung mit drei Datenleitungen 106, 107, 108 gemäß einer 0,25µm Technologie-Metallisierungsebene M3. Die Leiterbahngeometrie ist gegeben durch eine Leiterbahnhöhe von 0,45µm, einem Abstand von 1,0µm, einer Breite von 1,2µm. Das verwendete Dielektrikum im Rahmen des Ausführungsbeispiels ist Siliziumdioxid.

Die sich aufgrund dieser Anordnung ergebenden Kapazitäten sind für die Koppelkapazität C(Koppel) = 75 fF und die Erdungskapazität C(ground) = 40 fF.

Ferner ist eine weitere Busleitung 112 vorgesehen, zum Übertragen von im weiteren beschriebenen Umwandlungsbits, die zwischen die Codiervorrichtung 101 und Decodiervorrichtung 114 geschaltet ist.

Die Codiervorrichtung 101 weist einen Prozessor 102 auf. Ferner weist die Codiervorrichtung 101 eine mit dem Prozessor 102 gekoppelte Bitfolgen-Ermittlungseinheit 103 auf, mit der anhand einer in einem Speicher (nicht dargestellt) gespeicherten Abbildungstabelle dort vorgegebene, gespeicherte erste Bitfolgen mit einer erhöhten Bitfehlerwahrscheinlichkeit bei deren Übertragung über die Busleitungen 106, 107, 108 aus einer zu übertragenden Bitfolge, die der Bitfolgen-Ermittlungseinheit 103 von dem Prozessor 102 zugeführt worden ist, ermittelt wird.

Die Vielzahl zeitlich aufeinanderfolgender Bitfolgen weist zu jedem Übertragungszeitpunkt eine Bitfolge mit jeweils einer der Anzahl der vorhandenen Datenleitungen des Computerbus entsprechenden Anzahl zu übertragender Bits auf, gemäß diesem Ausführungsbeispiel mit drei Datenleitungen 106, 107, 108 entsprechende Bitfolgen mit jeweils drei Bit. Jede Bitfolge, gemäß dem Ausführungsbeispiel der Datenwortbreite von drei Bit wird zu jeweils einem Takt, vorgegeben durch einen Taktgeber (nicht dargestellt) übertragen. Es wird jeweils eine Bitfolge pro Zeitschritt an die Datenleitungen des Computerbus 106, 107, 108 angelegt und mittels an den Datenleitungen 106, 107, 108 angeschlossenen Treiberschaltungen 109, 110, 111 entsprechend dem jeweiligen elektrischen Spannungspegel, der den Wert des entsprechenden Bits repräsentiert, an die Dekodiervorrichtung 114 übertragen, d.h. dieser zugeführt.

In der folgenden Tabelle ist jeweils eine erste Bitfolgenkombination, die jeweils zwei Bitfolgen zu zwei aufeinanderfolgenden Übertragungszeitpunkten tₙ₋₁ und tₙ aufweist, dargestellt, bei denen aufgrund des Zustandsübergangs der anliegenden Signale zum Zeitpunkt tₙ₋₁ zu dem Zeitpunkt tₙ eine erhöhte Bitfehlerwahrscheinlichkeit zu beobachten ist.

| Erste Bitfolgenkombination | | Zweite Bitfolgenkombination | |
|---|---|---|---|
| tₙ₋₁ | tₙ | tₙ₋₁ | tₙ |
| "...010..." | "...101..." | "...010..." | "...100..." |
| "...000..." | "...101..." | "...000..." | "...100..." |
| "...000..." | "...111..," | "...000..." | "...110..." |
| "...101..," | "...010..." | "...101..." | "...011..," |
| "...111..." | "...010..." | "...111..." | "...011..." |
| "...111...," | "...000..." | "...111..." | "...001..." |

Das jeweils in der linken Spalte dargestellte Bit mit dem binären Wert "0" oder dem binären Wert "1" entspricht jeweils dem an der ersten Bit-Leitung 106 angelegten elektrischen Signal. Der in der mittleren Spalte der in der Tabelle aufgeführten Bitfolge jeweils aufgeführte Bitwert beschreibt den an der zweiten Bitleitung 107 angelegte elektrische Signalpegel. Der in der rechten Spalte in der Bitfolge dargestellte Bitwert entspricht dem an der dritten Bitleitung 108 angelegten Signalpegel.

Wird eine erste Bitfolgenkombination gemäß der oben dargestellten Tabelle der Bitfolgen-Ermittlungseinheit 103 zugeführt, so wird diese von der Bitfolgen-Ermittlungseinheit 103 ermittelt und es wird anhand der dargestellten Tabelle eine entsprechende zweite Bitfolgenkombination, in der Tabelle dargestellt jeweils in der gleichen Zeile der entsprechenden ersten Bitfolgenkombination, bei der die Bitfehlerwahrscheinlichkeit gegenüber der ersten Bitfolgenkombination reduziert ist, gebildet.

So wird beispielsweise bei einer ersten Bitfolgenkombination von einem Wechsel einer Bitfolge "010" zu einer Bitfolge "101" der zweite Teil "101" der ersten Bitfolgenkombination ersetzt durch einen entsprechenden zweiten Teil der zweiten Bitfolgenkombination mit den logischen Bitwerten "100", die nunmehr eine geringere Bitfehlerwahrscheinlichkeit aufweist als der zweite Teil "101" der ersten Bitfolgenkombination.

Dies ist darauf zurückzuführen, dass das dritte Bit mit dem logischen Wert 1 gemäß dem zweiten Teil der ersten Bitfolgenkombination gemäß dem zweiten Teil der zweiten Bitfolge nicht auf einen High-Pegel gelegt wird, so dass aufgrund der bestehenden Koppelkapazitäten der Signalpegel der mittleren Datenleitung nicht in ausreichender Weise erhöht wird, dass statistisch betrachtet die entsprechende Schwelle im Rahmen der Dekodierung überschritten wird, so dass auch bei Empfang der elektrischen Signale für die mittlere Datenleitung ein logischer Wert "0" korrekt decodiert wird.

In entsprechender Weise werden auch die in den weiteren Zeilen der oben dargestellten Tabellen korrespondierend für die ersten Bitfolgenkombinationen ersetzt durch die entsprechenden korrespondierenden zweiten Bitfolgenkombinationen.

Für alle weiteren unkritischen Bitfolgenkombinationen, , von denen beispielhaft einige in der unteren Tabelle aufgeführt sind, wird keine Abbildung der zu übertragenden Bitfolgenkombinationen durchgeführt.

Gemäß diesem Ausführungsbeispiel wird jeweils ein Umwandlungsbit mit einem ersten Binärwert gemäß dem Ausführungsbeispiel mit einem logischen Wert "1" von einer Bitfolgen-Umwandlungseinheit 104, in der auch die Abbildung der ersten Bitfolgenkombination auf die zweiten Bitfolgenkombination erfolgt, erzeugt. Für jede Bitfolgenkombination, die nicht umgewandelt wird, wird ein Umwandlungsbit mit dem logischen Wert "0" erzeugt.

Die Umwandlungsbits werden ebenso wie die Bitfolge mit den zweiten Bitfolgenkombination einer Sendeeinheit 105 zugeführt und die Übertragungsbits werden von der Sendeeinheit über eine Umwandlungsbit-Busleitung 112 mit einem entsprechenden zwischengeschalteten Treiberschaltung 113 zu der Decodiervorrichtung 114, insbesondere einer Empfängereinheit 115, übertragen.

Ferner werden die zu übertragenden Bitfolgen über die Datenleitungen 106, 107, 108 der Empfängereinheit 115 zugeführt.

Die empfangenen Umwandlungsbits werden einer Umwandlungsbit-Ermittlungseinheit 117 zum Ermitteln für die zweite Bitfolgenkombination zugeführt, welche zweite Bitfolgenkombination jeweils von der Empfangseinheit 115 einer Bitfolgen-Ermittlungseinheit 116 zugeführt wird, und es wird ermittelt, ob zu dieser empfangenen jeweiligen Bitfolgenkombination ein zugehöriges Umwandlungsbit mit dem logischen Wert "1" empfangen worden ist.

Ist dies der Fall, so wird gemäß der auch in der Decodiervorrichtung 114 gespeicherten Abbildungstabelle eine inverse Abbildung der zweiten Bitfolgenkombination auf die zugehörige erste Bitfolgenkombination durchgeführt.

Ist jedoch zu einer entsprechenden zweiten Bitfolge das zugehörige Umwandlungsbit mit einem Wert "0" detektiert, so wird keine Abbildung der empfangenen zweiten Bitfolgenkombination durchgeführt.

Die auf diese Weise bearbeiteten und in der Bitfolgen-Umwandlungseinheit 118 umgewandelten Bits werden einem an die Bitfolgen-Umwandlungseinheit angeschlossenen Prozessor 119 zur weiteren Verarbeitung zugeführt.

In diesem Dokument sind folgende Veröffentlichungen zitiert:
[1] A. B. Kahng et al., Interconnect Tuning Strategies for High-Performance ICs, Proceedings of Design, Automation and Testing in Europe, Paris, Februar 1998;
[2] Cadence Datasheet, Envisia^{TM} place-and-route with signal and design integrity, erhältlich über das Internet am 22. Mai 2000, unter der Adresse:
   http://4.18.241.156/company/pr/archive99/si.pdf
[3] T. Grams, "Kodierungsverfahren", BI Hochschul-Taschenbücher, 625, S. 64 - 75 1986;
[4] M. Cuviello et al., Fault Modeling and Simulation for Crosstalk in System-an-Chip Interconnects, Proceedings of the International Conference on Computer-Aided Design (ICCAD), November 1999, erhältlich über das Internet am 8. Mai 2000, unter der Adresse:
   http://aspire.ucsd.edu/projects/dsm/publication.html
[5] X. Bai et al., Self-Test Methodolgy for At-Speed Test of Crosstalk in Chip Interconnects, Proceeding of the Design Automation Conference (DAC), Juni 2000, erhältlich über das Internet am 8. Mai 2000, unter der Adresse:
   http://aspire.ucsd.edu/projects/dsm/publication.html
[6] K. Steinbuch, Taschenbuch der Nachrichtenverarbeitung, Springer Verlag, S. 64 - 97, 1962
[7] DE 41 42 652 A1

### Bezugszeichenliste

- 100: Computerchip
- 101: Codiervorrichtung
- 102: Prozessor
- 103: Bitfolgen-Ermittlungseinheit
- 104: Bitfolgen-Umwandlungseinheit
- 105: Sendeeinheit
- 106: Erste Datenleitung
- 107: Zweite Datenleitung
- 108: Dritte Datenleitung
- 109: Erste Treiberschaltung
- 110: Zweite Treiberschaltung
- 111: Dritte Treiberschaltung
- 112: Umwandlungsbit-Leitung
- 113: Umwandlungsbit-Treiberschaltung
- 114: Decodiervorrichtung
- 115: Empfängereinheit
- 116: Bitfolgen-Ermittlungseinheit
- 117: Umwandlungsbit-Ermittlungseinheit
- 118: Bitfolgen-Umwandlungseinheit
- 119: Prozessor

## Patentansprüche

1. Verfahren zum Übertragen einer Vielzahl zu übertragender Bitfolgen über mehrere Leitungen (106, 107, 108),
• bei dem aus der Vielzahl zu übertragender Bitfolgen mindestens eine erste Bitfolgenkombination ermittelt wird, wobei die erste Bitfolgenkombination bei deren Übertragung aufgrund eines Übersprechens der die erste Bitfolgenkombination repräsentierenden Signale über die Leitungen eine erhöhte Bitfehlerwahrscheinlichkeit aufweist,
• wobei die Ermittlung unter Verwendung einer Abbildungstabelle erfolgt, in der der mindestens einen ersten Bitfolgenkombination eine zweite Bitfolgenkombination mit geringerer Bitfehlerwahrscheinlichkeit zugeordnet ist,
• bei dem die ermittelte erste Bitfolgenkombination entsprechend der Abbildungstabelle in die zweite Bitfolgenkombination umgewandelt wird,
• bei dem bei der Umwandlung ein Umwandlungsbit gespeichert wird, mit dem angegeben wird, dass die zweite Bitfolgenkombination eine umgewandelte erste Bitfolgenkombination darstellt, und
• bei dem die zu übertragende Vielzahl von Bitfolgen mit der zweiten Bitfolgenkombination und dem zugehörigen Umwandlungsbit übertragen werden.

2. Verfahren nach Anspruch 1,
• bei dem bei der Übertragung zu jedem Übertragungszeitpunkt jeweils ein Bit an jeder Leitung angelegt wird, und
• bei dem die erste Bitfolgenkombination und die zweite Bitfolgenkombination gebildet werden durch zeitlich aufeinanderfolgende Bits, die zu aufeinanderfolgenden Übertragungszeitpunkten an den Leitungen angelegt werden sollen.

3. Verfahren nach Anspruch 1 oder 2,
bei dem die Umwandlungsbits über eine weitere Leitung (112) übertragen werden.

4. verfahren nach Anspruch 1 oder 2,
bei dem die Umwandlungsbits zeitlich versetzt zu der zugehörigen zweiten Bitfolge über die Leitungen übertragen werden.

5. Verfahren nach einem der Ansprüche 1 bis 4,
bei dem die Vielzahl von Bitfolgen mit der zweiten Bitfolgenkombination und die Umwandlungsbits über mehrere Leitungen empfangen und gemäß folgenden Schritten bearbeitet werden:
• mindestens die zweite Bitfolgenkombination wird in der Vielzahl empfangener Bitfolgen ermittelte
• für die zweite Bitfolgenkombination wird ermittelte ob zu dieser ein zugehöriges Umwandlungsbit vorhanden ist, mit dem angegeben wird, dass die ermittelte zweite Bitfolgenkombination eine umgewandelte erste Bitfolgenkombination darstellt,
• die zweite Bitfolgenkombination wird in die erste Bitfolgenkombination umgewandelt.

6. Digitale Schaltungsanordnung zum Übertragen einer Vielzahl zu übertragender Bitfolgen über mehrere Leitungen (106, 107, 108),
• mit einer Bitfolgenermittlungseinheit (103) zum Ermitteln der mindestens einen ersten Bitfolgenkombination in der Vielzahl zu übertragender Bitfolgen, wobei die erste Bitfolgenkombination bei deren Übertragung aufgrund eines Übersprechens der die erste Bitfolgenkombination repräsentierenden Signale über die Leitungen eine erhöhte Bitfehlerwahrscheinlichkeit aufweist,
• mit einer Bitfolgenumwandlungseinheit (104) zum Umwandeln einer ermittelten ersten Bitfolgenkombination in eine zweite Bitfolgenkombination unter Verwendung einer Abbildungstabelle, in der der mindestens einen ersten Bitfolgenkombination eine zweite Bitfolgenkombination mit geringerer Bitfehlerwahrscheinlichkeit zugeordnet ist, mittels welcher Bitfolgenumwandlungseinheit zumindest bei jeder Umwandlung ein Umwandlungsbit erzeugt wird, mit dem angegeben wird, dass die zweite Bitfolgenkombination eine umgewandelte erste Bitfolgenkombination darstellt, und
• mit einer Übertragungseinheit (105) zum Übertragen der zu übertragenden Bitfolgenkombination mit der zweiten Bitfolgenkombination und dem zugehörigen Umwandlungsbit.

7. Digitale Schaltungsanordnung nach Anspruch 6,
mit einer Mehrzahl von Bitleitungen, die an die Übertragungseinheit angeschlossen sind zum Übertragen der zu übertragenden Bitfolge.

8. Digitale Schaltungsanordnung zum Bearbeiten einer Vielzahl empfangener Bitfolgen über mehrere Leitungen,
• mit einer Bitfolgenermittlungseinheit (116) zum Ermitteln mindestens einer zweiten Bitfolgenkombination in der Vielzahl empfangener Bitfolgen unter Verwendung einer Abbildungstabelle, in der mindestens einer ersten Bitfolgenkombination mit erhöhter Bitfehlerwahrscheinlichkeit bei deren Übertragung aufgrund eines Übersprechens der die erste Bitfolgenkombination repräsentierenden Signale über die Leitungen die mindestens zweite Bitfolgenkombination mit geringerer Bitfehlerwahrscheinlichkeit, zugeordnet ist,
• mit einer Umwandlungsbit-Ermittlungseinheit (117) zum Ermitteln für die zweite Bitfolgenkombination, ob zu dieser ein zugehöriges Umwandlungsbit vorhanden ist, mit dem angegeben wird, dass die ermittelte zweite Bitfolgenkombination eine umgewandelte erste Bitfolgenkombination darstellt,
• mit einer Bitfolgenumwandlungseinheit (118) zum Umwandeln der ermittelten zweiten Bitfolgenkombination in die erste Bitfolgenkombination.

## Claims

1. A method for transmitting a multiplicity of bit-sequences to be transmitted via a plurality of lines (106, 107, 108),
• in which at least one first bit-sequence combination is determined from the multiplicity of bit-sequences to be transmitted, said first bit-sequence combination having an increased bit-error probability when it is transmitted due to crosstalk on the lines from the signals representing the first bit-sequence combination,
• said determination taking place using a mapping table in which the at least one first bit-sequence combination has an associated second bit-sequence combination having lower bit-error probability,
• in which the determined first bit-sequence combination is converted into the second bit-sequence combination in accordance with the mapping table,
• in which a conversion bit is stored during the conversion, to specify that the second bit-sequence combination represents a converted first bit-sequence combination, and
• in which the multiplicity of bit-sequences to be transmitted are transmitted with the second bit-sequence combination and the associated conversion bit.

2. The method as claimed in claim 1,
• in which one bit is applied to each line at each point of transmission during transmission, and
• in which the first bit-sequence combination and the second bit-sequence combination are formed by temporally successive bits, which are to be applied to the lines at successive points of transmission.

3. The method as claimed in claim 1 or 2,
in which the conversion bits are transmitted via a further line (112).

4. The method as claimed in claim 1 or 2,
in which the conversion bits are transmitted via the lines temporally staggered in relation to the associated second bit-sequence.

5. The method as claimed in one of claims 1 to 4,
in which the multiplicity of bit-sequences with the second bit-sequence combination and the conversion bits are received via a plurality of lines and are processed in accordance with the following steps:
• determining at least the second bit-sequence combination in the multiplicity of received bit-sequences,
• determining whether an associated conversion bit is present for the second bit-sequence combination, said conversion bit indicating that the determined second bit-sequence combination represents a converted first bit-sequence combination,
• converting the second bit-sequence combination into the first bit-sequence combination.

6. A digital circuit arrangement for transmitting a multiplicity of bit-sequences to be transmitted via a plurality of lines (106, 107, 108),
• having a bit-sequence determination unit (103) for determining the at least one first bit-sequence combination, in the multiplicity of bit-sequences to be transmitted, said first bit-sequence combination having an increased bit-error probability when it is transmitted due to crosstalk on the lines from the signals representing the first bit-sequence combination,
• having a bit-sequence conversion unit (104) for converting a determined first bit-sequence combination into a second bit-sequence combination using a mapping table in which the at least one first bit-sequence combination has an associated second bit-sequence combination having lower bit-error probability, by means of which bit-sequence conversion unit a conversion bit is generated for every conversion at least, said conversion bit indicating that the second bit-sequence combination represents a converted first bit-sequence combination, and
• having a transmission unit (105) for transmitting the bit-sequence combination to be transmitted, with the second bit-sequence combination and the associated conversion bit.

7. The digital circuit arrangement as claimed in claim 6,
having a plurality of bit lines which are connected to the transmission unit for transmitting the bit-sequence to be transmitted.

8. A digital circuit arrangement for processing a multiplicity of received bit-sequences via a plurality of lines,
• having a bit-sequence determination unit (116) for determining at least one second bit-sequence combination in the multiplicity of received bit-sequences using a mapping table in which the at least one first bit-sequence combination having increased bit-error probability, when it is transmitted, due to crosstalk on the lines from the signals representing the first bit-sequence combination is associated to the at least second bit-sequence combination having lower bit-error probability,
• having a conversion-bit determination unit (117) for determining whether an associated conversion bit is present for the second bit-sequence combination, said conversion bit indicating that the determined second bit-sequence combination represents a converted first bit-sequence combination,
• having a bit-sequence conversion unit (118) for converting the determined second bit-sequence combination into the first bit-sequence combination.

## Revendications

1. Procédé pour transmettre une multiplicité de suites de bits à transmettre, par l'intermédiaire de plusieurs lignes (106, 107, 108),
• dans lequel au moins une première combinaison de suites de bits est déterminée à partir de la multiplicité de suites de bits à transmettre, la première combinaison de suites de bits possédant une probabilité accrue d'erreurs sur les bits, lors de sa transmission, en raison d'une diaphonie des signaux, qui représentent la première combinaison de suites de bits, par l'intermédiaire des lignes,
• la détermination s'effectuant moyennant l'utilisation d'un tableau de représentation, dans lequel une seconde combinaison de suites de bits ayant une probabilité plus faible d'erreurs sur les bits est associée à la au moins une première combinaison de suites de bits,
• selon lequel la première combinaison déterminée de suites de bits est convertie conformément au tableau de représentation, en la seconde combinaison de suites de bits,
• selon lequel lors de la conversion, un bit de conversion est mémorisé, bit de conversion qui indique que la seconde combinaison de suites de bits représente une première combinaison de suites de bits convertie, et
• selon lequel la multiplicité à transmettre de suites de bits est transmise avec la seconde combinaison de suites de bits et avec le bit de conversion associé.

2. Procédé selon la revendication 1,
• dans lequel lors de la transmission en direction de chaque point de transmission, respectivement un bit est appliqué à chaque ligne, et
• selon lequel la première combinaison de suites de bits et la seconde combinaison de suites de bits sont formées par des bits qui se succèdent dans le temps et qui sont appliqués aux lignes à des instants successifs de transmission.

3. Procédé selon la revendication 1 ou 2, selon lequel les bits de conversion sont transmis par l'intermédiaire d'une autre ligne (112).

4. Procédé selon la revendication 1 ou 2, selon lequel les bits de conversion sont transmis par l'intermédiaire des lignes en étant décalés dans le temps par rapport à la seconde suite de bits associée.

5. Procédé selon l'une des revendications 1 à 4, selon lequel la multiplicité de suites de bits comportant la seconde combinaison de suites de bits et les bits de conversion sont reçues par l'intermédiaire de plusieurs lignes et sont traitées conformément aux étapes suivantes:
• au moins la seconde combinaison de suites de bits est déterminée dans la multiplicité de suites de bits reçues,
• pour la seconde combinaison de suites de bits on détermine si pour cette dernière est présent un bit de conversion associé indiquant que la seconde combinaison déterminée de suites de bits représente une première combinaison de suites de bits convertie,
• la seconde combinaison de suites de bits est convertie en la première combinaison de suites de bits.

6. Circuit numérique pour la transmission d'une multiplicité de suites de bits à transmettre au moyen de plusieurs lignes (106, 107, 108),
• comportant une unité (103) de détermination de suites de bits pour déterminer au moins une première combinaison de suites de bits dans la multiplicité de suites de bits à transmettre, la première combinaison de suites de bits comportant une probabilité accrue d'erreurs sur les bits lors de sa transmission, en raison d'une diaphonie des signaux représentant la première combinaison de suites de bits, par l'intermédiaire des lignes,
• une unité (104) de conversion de suites de bits pour convertir une première combinaison de suites de bits déterminée en une seconde combinaison de suites de bits moyennant l'utilisation d'un tableau de représentation, dans lequel une seconde combinaison de suites de bits ayant une probabilité plus faible d'erreurs sur les bits est associée à au moins une première combinaison de suites de bits, l'unité de conversion de suites de bits à l'aide de laquelle au moins lors de chaque conversion est produit un bit de conversion qui indique que la seconde combinaison de suites de bits représente une première combinaison de suites de bits convertie, et
• une unité (105) de transmission pour la transmission de la combinaison de suites de bits à transmettre avec la seconde combinaison de suites de bits et le bit de conversion associé.

7. Circuit numérique selon la revendication 6, comportant une multiplicité de lignes de bits, qui sont connectées à l'unité de transmission pour la transmission de la suite de bits à transmettre.

8. Circuit numérique pour le traitement d'une multiplicité de suites de bits reçus, au moyen de plusieurs lignes,
• comportant une unité (416) de détermination de suites de bits pour déterminer une seconde combinaison de suites de bits dans la multiplicité de suites de bits reçues, moyennant l'utilisation d'un tableau de représentation, dans lequel la au moins une première combinaison de suites de bits ayant une probabilité accrue d'erreurs sur les bits est associée à la au moins une seconde combinaison de suites de bits possédant une probabilité plus faible d'erreurs sur les bits, lors de la transmission, en raison de la diaphonie des signaux représentant la première combinaison de suites de bits, par l'intermédiaire des lignes,
• une unité (117) de détermination du bit de conversion pour déterminer pour la seconde combinaison de suites de bits si dans cette dernière est présent un bit de conversion associé, qui indique que la seconde combinaison déterminée de suites de bits représente une première combinaison de suites de bits convertie,
• une unité (118) de conversion de suites de bits pour convertir la seconde combinaison déterminée de suites de bits en la première combinaison de suites de bits.
